# EUROPEAN PATENT APPLICATION

(11) **EP 1 271 807 A1**
(43) Date of publication of application: **02.01.2003**
(21) Application number: 02008498.4
(22) Date of filing: 15.04.2002
(51) Int. Cl.: H04B 10/155, H04J 14/02, H04N 7/22

(54) **Optical vestigial sideband modulator**

(30) Priority: 19.06.2001 JP 2001184917
(71) Applicant: KDDI Submarine Cable Systems Inc., Tokyo (JP)
(72) Inventor: Yamada, Yuichi, c/o KDDI Submarine, Shinjuku-ku, Tokyo (JP); Nakagawa, Shinichi, c/o KDDI Submarine, Shinjuku-ku, Tokyo (JP); Taga, Hidenori, c/o KDDI Submarine, Shinjuku-ku, Tokyo (JP); Inoue, Takanori, c/o KDDI Submarine, Shinjuku-ku, Tokyo (JP); Shibano, Eiichi, c/o KDDI Submarine, Shinjuku-ku, Tokyo (JP); Yamauchi, Hiroshi, c/o KDDI Submarine, Shinjuku-ku, Tokyo (JP)
(74) Representative: Schaumburg, Thoenes & Thurn

(57) **Abstract**

A feature of this invention is to realize a vestigial sideband (VSB) modulation with a simple configuration.

A data generating circuit (10) generates a transmission data composed of an optical pulse with duty factor of 50% according to a clock from a clock generating circuit (12). An optical source (14) generates a laser light that functions as an optical carrier to carry the transmission data generated from the data generating circuit (10) and applies it to a data modulator (16). The data modulator (16) intensity-modulates the laser light from the optical source (14) according to the transmission data from the data generating circuit (10) and generates an optical signal of an RZ optical pulse train to carry the transmission data. The generated optical pulse train is applied to a phase modulator (18). According to the clock from the clock generating circuit (12), a sine wave generating circuit (20) generates a sine wave signal synchronizing and having the same frequency with the clock. A phase shifting circuit (22) shifts phase of the sine wave from the sine wave generating circuit (20) by π/2 and applies it to the phase modulator (18). A phase modulator (18) modulates optical phase of each optical pulse in the optical pulse train from the data modulator (16) according to the sine wave from the phase shifting circuit (22).

## Description

### FIELD OF THE INVENTION

This invention relates to an optical transmitter and optical modulator, and more specifically relates to an optical transmitter and optical modulator to realize optical vestigial sideband (VSB) modulation.

### BACKGROUND OF THE INVENTION

Hand in hand with the progression of the wavelength division multiplexing transmission technology, a transmission capacity of an optical fiber has been increased. However, in a standard optical modulation system (both sideband (BSB) modulation), the number of optical signal wavelengths to be packed in a restricted band is limited. As technology to narrow wavelength intervals even more, it has been proposed to use single sideband (SSB) modulation and vestigial sideband (VSB) modulation (See "LiNbO3 Optical Single-Sideband Modulator", Electronics OFC2000PD16, and "10 Gbit/s optical signal sideband system", Electronics Letters vol. 33, pp. 970-973).

However, no conventional configurations ever proposed are very practical because some require a special modulator and driving system (for instance, the former of the above-mentioned papers), some require a special technique such as a Hilbert transform, and some require a narrow-band optical filter to remove one sideband part.

### SUMMARY OF THE INVENTION

It is therefore an object of the present invention to provide an optical transmitter and optical modulator to realize VSB modulation with a simpler configuration.

An optical transmitter according to the invention comprises an optical source to generate an optical carrier, a data modulator to modulate the optical carrier from the optical source according to a transmission data, a modulating signal generator to generate a modulating signal synchronizing with the transmission data and whose phase is shifted from that of the transmission data by a predetermined phase amount, and an optical phase modulator to modulate optical phase of the optical pulse from the data modulator according to the modulating signal from the modulating signal generator and is characterized by that when the optical pulse locates in the middle of one bit period, a phase difference of the modulating signal relative to the one bit period in the optical phase modulator stays within ranges from π/4 to 3π/4 and from - π/4 to -3π/4.

An optical modulator according to the invention to VSB-modulate an optical pulse train carrying data comprises a modulating signal generator to generate a modulating signal that synchronizes with the optical pulse train and whose phase is shifted from that of the optical pulse train by a predetermined phase amount and an optical phase modulator to modulate optical phase of each optical pulse in the optical pulse train according to the modulating signal from the modulating signal generator and is characterized by that when the optical pulse locates in the middle of one bit period, a phase difference of the modulating signal relative to the one bit period in the optical phase modulator stays in ranges from π/4 to 3π/4 and from -π/4 to -3π/4.

### BRIEF DESCRIPTION OF THE DRAWING

The above and other objects, features and advantages of the present invention will be apparent from the following detailed description of the preferred embodiments of the invention in conjunction with the accompanying drawings, in which:
FIG. 1 shows a schematic block diagram of an embodiment according to the present invention;
FIG.2 shows waveforms in conventional phase modulation;
FIG. 3 shows waveforms in phase modulation of the present embodiment;
FIG. 4 shows an example of a DSB spectrum;
FIG. 5 shows an example of a VSB spectrum according to the present embodiment;
FIG. 6 shows an example of a spectrum when a phase difference is 0 (prior art);
FIG. 7 shows an example of a spectrum when a phase difference is -π/4;
FIG. 8 shows an example of a spectrum when a phase difference is -π/2;
FIG. 9 shows an example of a spectrum when a phase difference is -3π/4;
FIG. 10 shows an example of a spectrum when a phase difference is -π (Prior art); and
FIG. 11 shows a measured example of Q value penalty relative to a phase difference.

### DETAILED DISCRIPTION

Embodiments of the invention are explained below in detail with reference to the drawings.

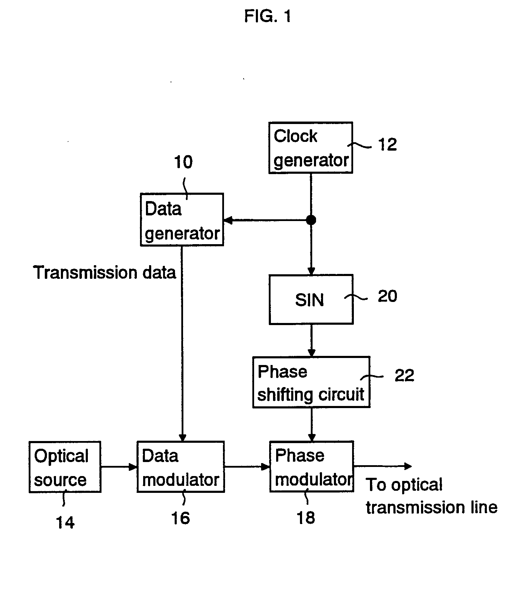

FIG. 1 shows a schematic block diagram of an embodiment according to the present invention. A data generating circuit 10 generates and outputs a transmission data composed of an optical pulse with a duty factor of 50% according to a clock from a clock generating circuit 12. An optical source 14 generates a laser light to function as an optical carrier to carry the transmission data from the data generating circuit 10 and applies it to a data modulator 16. The data modulator 16 modulates intensity of the laser light from the optical source 14 according to the transmission data from the data generating circuit 10 so as to generate optical signal of an RZ optical pulse train that carries the transmission data. The generated optical pulse train is applied to a phase modulator 18.

On the other hand, a sine wave generating circuit 20 generates a sine wave signal synchronizing and having the same frequency with the clock according to the clock from the clock generating circuit 12. A phase shifting circuit 22 shifts phase of the sine wave from the sine wave generating circuit 20 by π/2 and applies it to the phase modulator 18.

The phase modulator 18 modulates optical phase of each optical pulse of the optical pulse train from the data modulator 16 according to the sine wave from the phase shifting circuit 22. The phase-modulated optical pulse train is output onto an optical fiber transmission line.

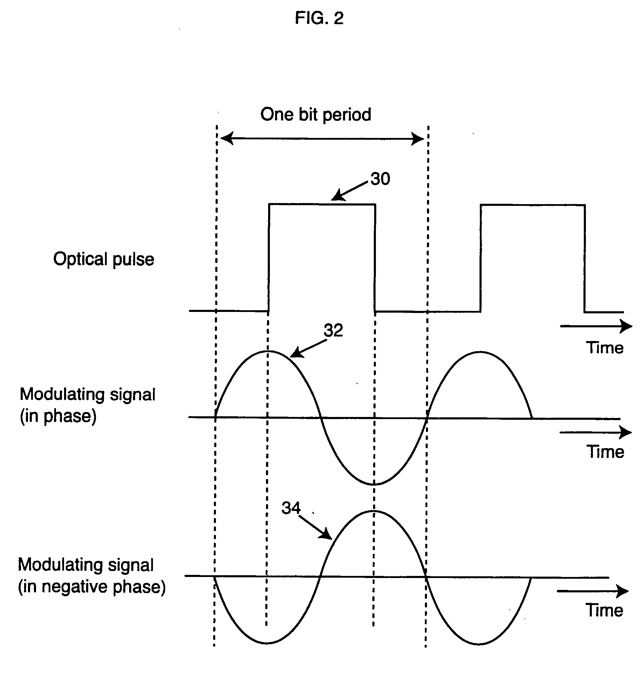

Conventionally, the phase modulator 18 is disposed to suppress self-phase modulation caused by nonlinear effect of an optical fiber. In that case, phase relation between an optical pulse and a modulating signal for phase modulation is that the sine wave reaches one extremal value at a rising point of the optical pulse and reaches the other extremal value at a falling of the optical pulse as shown in FIG. 2. In other words, their phase relation is that polarity of the modulating signal varies just around the center of the optical pulse. Assuming that an optical pulse exists in the middle of one bit period, a modulating signal becomes either in phase (a phase difference is zero) or in negative phase (a phase difference is π) relative to an optical pulse. In FIG. 2, reference numerals 30, 32, and 34 denote an optical pulse to be phase-modulated, a modulating signal in phase, and a modulating signal in negative phase respectively.

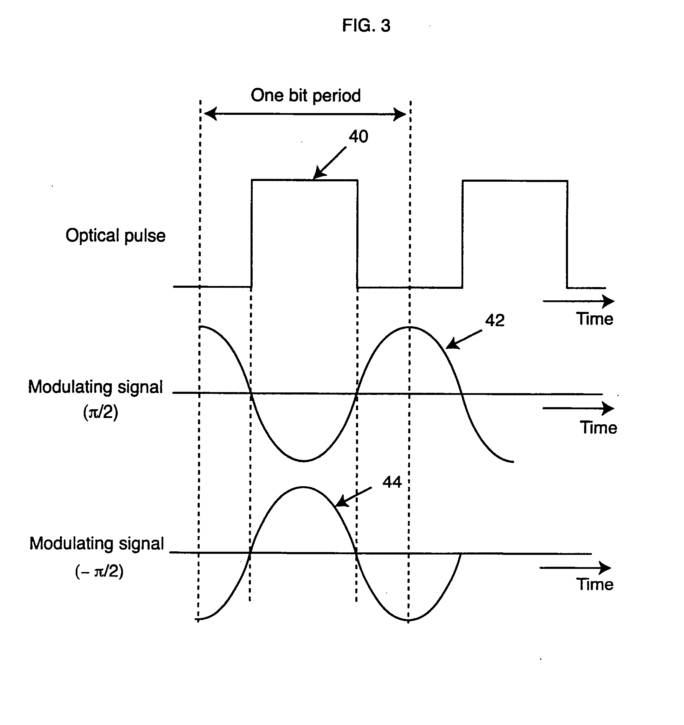

On the other hand, in the present embodiment, the phase shifting circuit 22 is disposed to shift the phase of the sine wave signal by +π/2 or -π/2 and applies it to the phase modulator 18 as a modulating signal. FIG. 3 shows a waveform-timing diagram in the phase modulator 18 according to the present embodiment. Waveform 40 denotes an optical pulse to be applied to the phase modulator 18 from the data modulator 16, waveform 42 denotes a modulating signal having a phase shifting amount of π/2 to be applied to the phase modulator 18 from the phase shifting circuit 22, and waveform 44 denotes a modulating signal having a phase shifting amount of -π/2 to be applied to the phase modulator 18 from the phase shifting circuit 22. As a matter of convenience in description, the phase shifting amount of the phase shifting circuit 22 is described as π/2 or -π/2. However, practically, this amount shows a phase difference between an optical pulse and a modulating signal in the phase modulator 18.

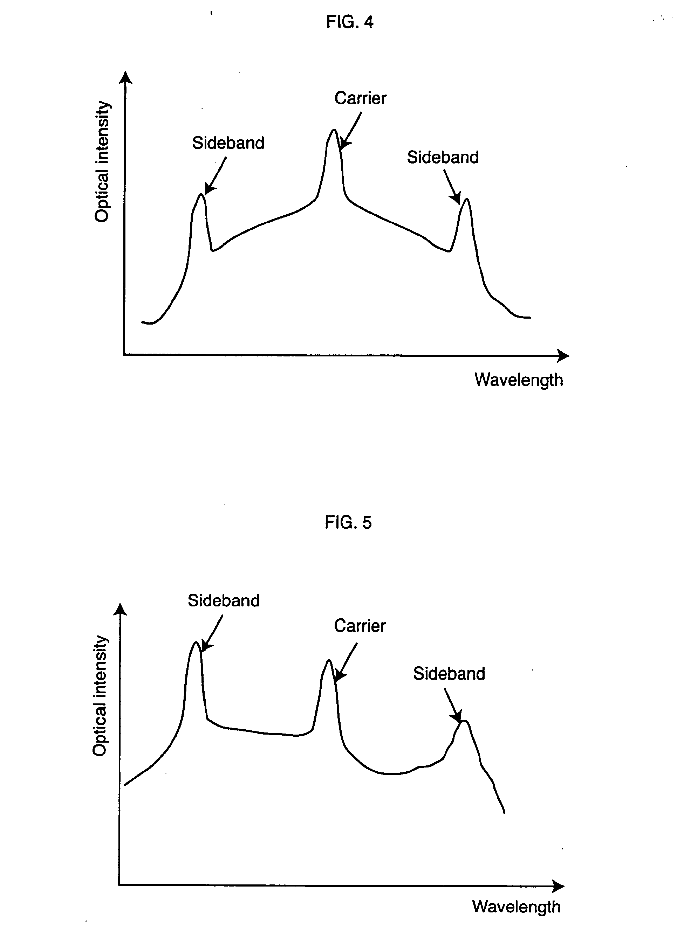

When phase of phase modulation is intentionally shifted as in the present embodiment, one of two signal sidebands generated by data modulation (intensity modulation) at the data modulator 16 is stressed and the other is suppressed. FIG. 5 shows a spectrum obtained when this embodiment is applied to an optical pulse having a spectrum shown in FIG. 4. As apparent from FIG. 5, one sideband is stressed and the other is suppressed.

As a result that the phase of phase modulation is shifted, such an effect to prevent self-phase modulation by a nonlinear effect of an optical fiber decreases and leads to deterioration of transmission characteristics interacting with chromatic dispersion. To conquer such deterioration of transmission characteristics, a method to reduce accumulated chromatic dispersion by shortening a transmission distance and/or a method to reduce accumulated chromatic dispersion using fibers (dispersion management fibers) combined so as to flatten a dispersion slope should be employed. When the latter is used, it is possible to apply this embodiment to long haul transmission.

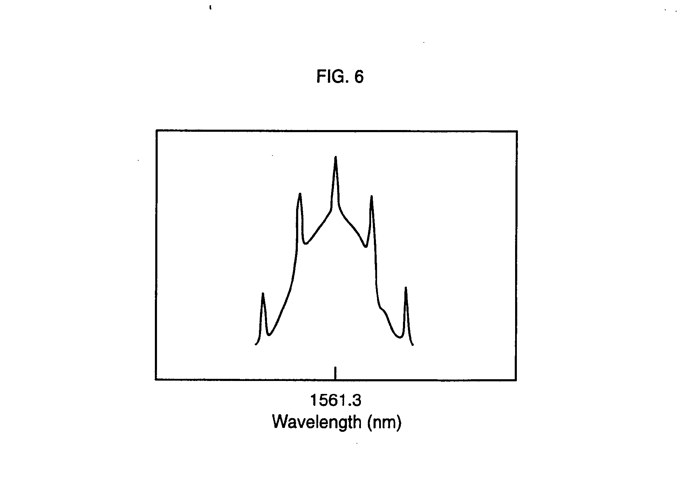

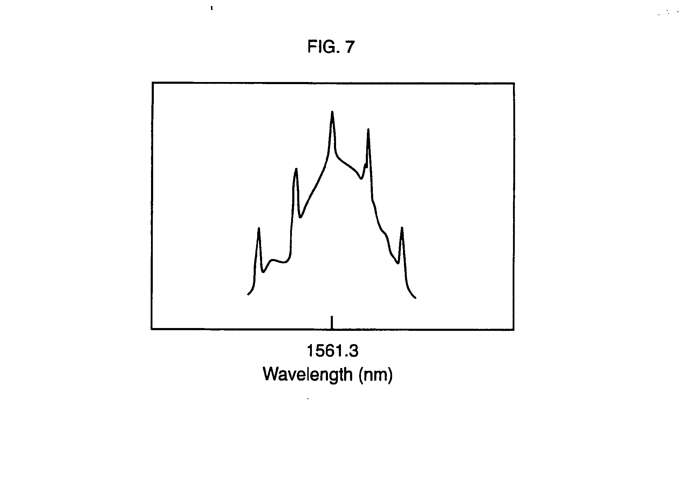

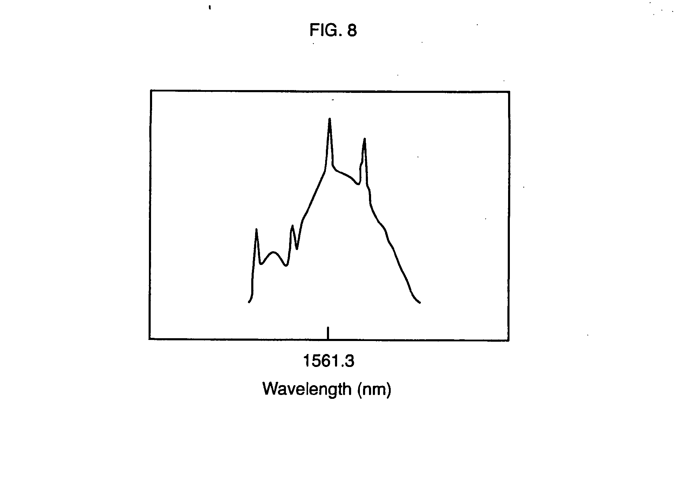

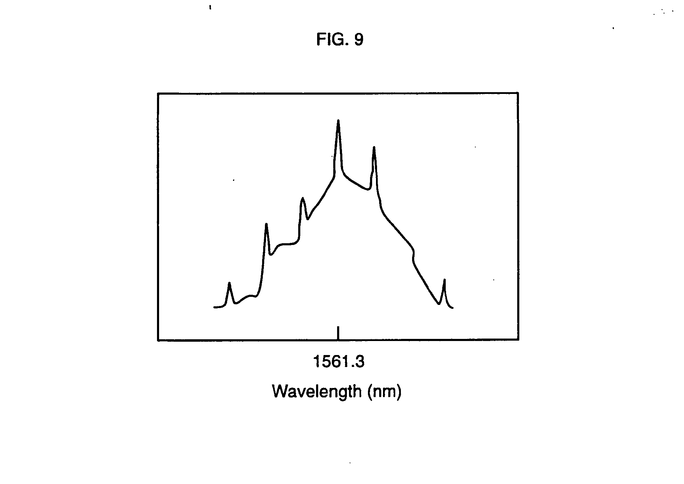

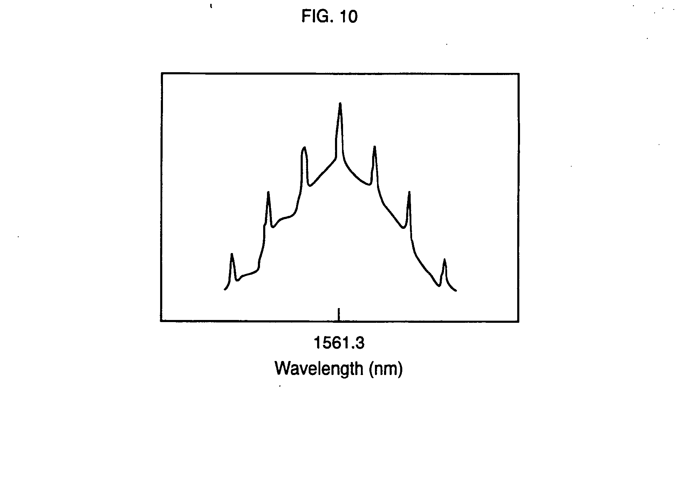

The influence that the phase shifting amount at the phase shifting circuit 22, more specifically the phase difference between the optical pulse and the modulating signal in the phase modulator 18 gives to the sideband is measured. FIG. 6 shows a schematic diagram of a spectrum when the phase difference is 0 (prior art), similarly, FIG. 7 shows that when the phase difference is -π/4, FIG. 8 shows that when the phase difference is -π/2, FIG. 9 shows that when the phase difference is -3π/4, and FIG. 10 shows that when the phase difference is -π (prior art). As obvious from FIGS. 6 through 10, when the phase difference is π/2 or -π/2, one sideband is most suppressed, and also a satisfactory sideband suppression effect is obtained when the phase difference is in a range between π/2-π/4 and π/2+π/4 or between -π/2-π/4 and -π/2+π/4.

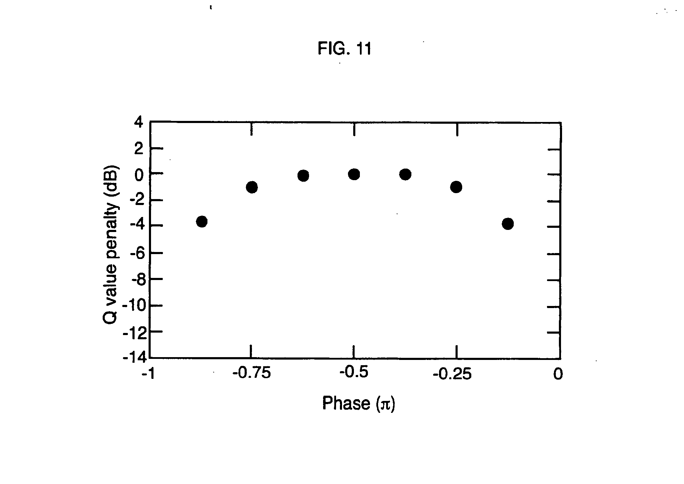

An influence that a phase difference at the phase modulator 18 gives to transmission characteristics is measured using a WDM signal with a wavelength interval of 0.15 nm, for instance. The result is shown in FIG. 11. The horizontal axis expresses the phase difference in the phase modulator 18 and the vertical axis expresses the penalty relative to the Q value obtained when the phase difference is -π/2. If the phase difference is set to 0 or π when the wavelength interval is 0.15 nm, the overlap of adjacent wavelengths becomes so considerable that it is impossible to measure the Q value. As clearly understandable from FIG. 11, although it is most preferable to set the phase difference between the optical pulse and modulating signal in the phase modulator 18 as π/2 or -π/2, a satisfactory Q value is also obtained in a range between π/2-π/4 and π/2+π/4 or between -π/2-π/4 and -π/2+π/4.

When the duty factor of the optical pulse is other than 50 %, a satisfactory VSB modulation is obtained by keeping the above relation of the phase difference between the optical pulse and modulating signal in the phase modulator 18. Furthermore, it is more effective when a waveform of the modulating signal is distorted so that a level of modulating signal becomes 0 at timing of rising and falling of the optical pulse and the modulating signal has only one polarity value within a period of the optical pulse. Such distortion of a waveform of modulating signal is easily obtained by adjusting input/output characteristics of an amplifier.

As readily understandable from the aforementioned explanation, according to the invention, VSB modulation is realized using very simple configuration.

While the invention has been described with reference to the specific embodiment, it will be apparent to those skilled in the art that various changes and modifications can be made to the specific embodiment without departing from the spirit and scope of the invention as defined in the claims.

## Claims

1. An optical transmitter comprising:
an optical source to generate an optical carrier;
a data modulator to modulate the optical carrier from the optical source according to a transmission data;
a modulating signal generator to generate a modulating signal that synchronizes with the transmission data and whose phase is shifted from that of the transmission data by a predetermined phase amount ; and
an optical phase modulator to modulate optical phase of the optical pulse from the data modulator according to the modulating signal from the modulating signal generator,
wherein when the optical pulse locates in the middle of one bit period, a phase difference of the modulating signal relative to the one bit period in the optical phase modulator stays within ranges between π/4 and 3π/4 and between -π/4 and -3π/4.

2. The optical transmitter of claim 1 wherein the phase difference of modulating signal relative to the one bit period in the optical phase modulator is practically either π/2 or -π/2.

3. An optical modulator to VSB-modulate an optical pulse train carrying data comprising:
a modulating signal generator to generate a modulating signal that synchronizes with the optical pulse train and whose phase is shifted from that of the optical pulse train by a predetermined phase amount; and
an optical phase modulator to modulate optical phase of each optical pulse in the optical pulse train according to the modulating signal from the modulating signal generator;
wherein when the optical pulse locates in the middle of one bit period, a phase difference of the modulating signal relative to the one bit period in the optical phase modulator stays within ranges between π/4 and 3π/4 and between -π/4 and -3π/4.

4. The optical modulator of claim 3 wherein the phase difference of the modulating signal relative to the one bit period in the optical phase modulator is practically either one of π/2 and -π/2.
